# EUROPEAN PATENT APPLICATION

(11) **EP 4 821 584 A1**
(43) Date of publication of application: **14.10.2026**
(21) Application number: 24900860.8
(22) Date of filing: 31.10.2024
(51) Int. Cl.: B01D 53/22, B01D 53/00, B01D 71/68, B01D 71/64

(54) **CARBON DIOXIDE CAPTURING APPARATUS AND PROCESS WITH IMPROVED ENERGY EFFICIENCY**

(30) Priority: 05.12.2023 KR 20230173918
(71) Applicant: Airrane Co., Ltd., Cheongju-si, Chungcheongbuk-do 28121 (KR); LOTTE CHEMICAL CORPORATION, Seoul 05551 (KR)
(72) Inventor: LEE, Chung Seop, Daejeon 34049 (KR); YIM, Jin Hyuk, Cheongju-si Chungcheongbuk-do 28123 (KR); BAEK, Eun Byeol, Cheongju-si Chungcheongbuk-do 28121 (KR); HAN, Sang Hoon, Daejeon 34070 (KR); HA, Seong Yong, Seoul 05555 (KR); LEE, Sang Jung, Seoul 07594 (KR); NAM, Sang A, Seoul 07594 (KR); KIM, Sang Hee, Seoul 07594 (KR); HAN, Jung Eun, Seoul 07594 (KR); CHO, Soo Yeon, Seoul 07594 (KR)
(74) Representative: Germain Maureau
(86) International application number: PCT/KR2024/016960
(87) International publication number: WO 2025/121673

(57) **Abstract**

The present invention relates to a carbon dioxide capturing apparatus and process, wherein a carbon dioxide recovery separation membrane process is performed by utilizing the cold heat, as it is, from a carbon dioxide liquefaction process through a separation tower, so that the energy consumed can be remarkably reduced and the carbon dioxide recovery rate can be notably improved through a recirculation separation membrane.

## Description

### [Technical Field]

The present invention relates to a carbon dioxide capturing apparatus and process with an improved energy efficiency.

### [Background Art]

Recently, as environmental issues, such as global warming and climate change caused by greenhouse gas, have become a growing concern, studies about a carbon dioxide capturing technique are being conducted to reduce emission of carbon dioxide in the greenhouse gas. The carbon dioxide capturing technique may be largely classified into post-combustion, precombustion, and oxyfuel combustion. The post-combustion CO₂ capturing technique is divided into chemical absorption using amine-based or ammonia-based absorbent, dry absorption using solid absorbent, rather than the existing absorption solution, and membrane separation using a membrane.

Among the carbon dioxide capturing techniques, the membrane separation using a membrane had an advantage of being an eco-friendly process and a technology has been proposed to obtain liquefied carbon dioxide by introducing a separation tower to increase the concentration of carbon dioxide and increase the ease of storage and use. However, according to the related art, in order to recover carbon dioxide from low-temperature gas obtained during the liquefaction process, after going through a process of recovering heat or cold energy, it is supplied to the separation membrane so that additional energy consumption is required.

Accordingly, the inventors repeatedly conducted the studies to solve the above-described problems and discovered that if the low-temperature gas obtained during the liquefaction process passes through a separation membrane in its low-temperature state while a recirculation separation membrane is introduced, the carbon dioxide recovery rate can be increased, and carbon dioxide separation efficiency can be increased without introducing additional processes, thereby reducing the energy consumption and completing the present invention.

### [Related Art Document]

### [Patent Document]

(Patent Document 1) Korean Unexamined Patent Application Publication No. 10-2021-0104469

### [Disclosure]

### [Technical Problem]

The present invention has made an effort to solve the above-described problems and an object of the present invention is to provide a carbon dioxide capturing apparatus and process which include a carbon dioxide capturing separation membrane, a recirculation separation membrane, a separation tower, and a carbon dioxide recovery separation membrane and utilize a cold energy of a carbon dioxide liquefaction process through the separation tower for the carbon dioxide recovery process using the carbon dioxide recovery separation membrane as it is, thereby remarkably reducing the energy consumed and notably improve the separation efficiency.

### [Technical Solution]

According to an aspect of the present invention, a carbon dioxide capturing apparatus includes a first capturing separation membrane which is supplied with a first capturing separation membrane supply gas including a gas mixture containing carbon dioxide to separate the first capturing separation membrane supply gas into a first capturing separation membrane permeation gas and a first capturing separation membrane residual gas, a second capturing separation membrane which is supplied with a second capturing separation membrane supply gas including the first capturing separation membrane permeation gas to separate the second capturing separation membrane supply gas into a second capturing separation membrane permeation gas and a second capturing separation membrane residual gas, a recirculation separation membrane which is supplied with the second capturing separation membrane residual gas to be separated into a recirculation separation membrane permeation gas and a recirculation separation membrane residual gas and circulates the recirculation separation membrane permeation gas to the second capturing separation membrane, a first heat exchanger which cools first heat exchanger supply gas including the second capturing separation membrane permeation gas, a carbon dioxide refinement separation tower including a separation tower which receives gas cooled in the first heat exchanger, an upper portion in which a carbon dioxide containing gas is obtained, and a lower portion in which a high-purity carbon dioxide liquid is obtained, and a first recovery separation membrane which is supplied with a carbon dioxide containing gas obtained from the upper portion to be separated into a first recovery separation membrane permeation gas and a first recovery separation membrane residual gas.

According to another aspect of the present invention, a carbon dioxide capturing process includes: supplying a first capturing separation membrane supply gas including a carbon dioxide containing gas mixture to a first capturing separation membrane to be separated into a first capturing separation membrane permeation gas and a first capturing separation membrane residual gas, supplying a second capturing separation membrane supply gas including the first capturing separation membrane permeation gas to a second capturing separation membrane to be separated into a second capturing separation membrane permeation gas and a second capturing separation membrane residual gas, supplying the second capturing separation membrane residual gas to a recirculation separation membrane to be separated into a recirculation separation membrane permeation gas and a recirculation separation membrane residual gas and circulating the recirculation separation membrane permeation gas to the second capturing separation membrane, cooling a first heat exchanger supply gas including the second capturing separation membrane permeation gas using a first heat exchanger, obtaining a carbon dioxide containing gas from an upper portion of a separation tower and recovering a high-purity carbon dioxide liquid from a lower portion of a separation tower through a separation and refinement process by supplying a gas cooled in the first heat exchanger to the separation tower, and supplying a carbon dioxide containing gas obtained from the upper portion to a first recovery separation membrane to be separated into a first recovery separation membrane permeation gas and a first recovery separation membrane residual gas.

### [Advantageous Effects]

The carbon dioxide capturing process and apparatus of the present invention recover the gas obtained from the separation tower through the separation membrane, thereby reducing an amount of discharged carbon dioxide.

Further, according to the present invention, the carbon dioxide in the gas obtained from the upper portion of the separation tower is recovered using the lot-temperature state formed in the separation tower (liquefaction process), thereby improving a carbon dioxide recovery efficiency without an additional heat exchange system.

Further, according to the present invention, the gas flow is recirculated in the carbon dioxide capturing process and apparatus to reduce an amount of discharged carbon dioxide and improve a carbon dioxide partial pressure, thereby increasing the separation efficiency.

### [Description of Drawings]

FIG. 1 illustrates a carbon dioxide capturing process diagram according to an embodiment of the present invention.
FIG. 2 illustrates a carbon dioxide capturing process diagram including a third capturing separation membrane according to another embodiment of the present invention.

### [Best Mode]

Hereinafter, the present invention will be described in more detail together with the accompanying drawings and Examples.

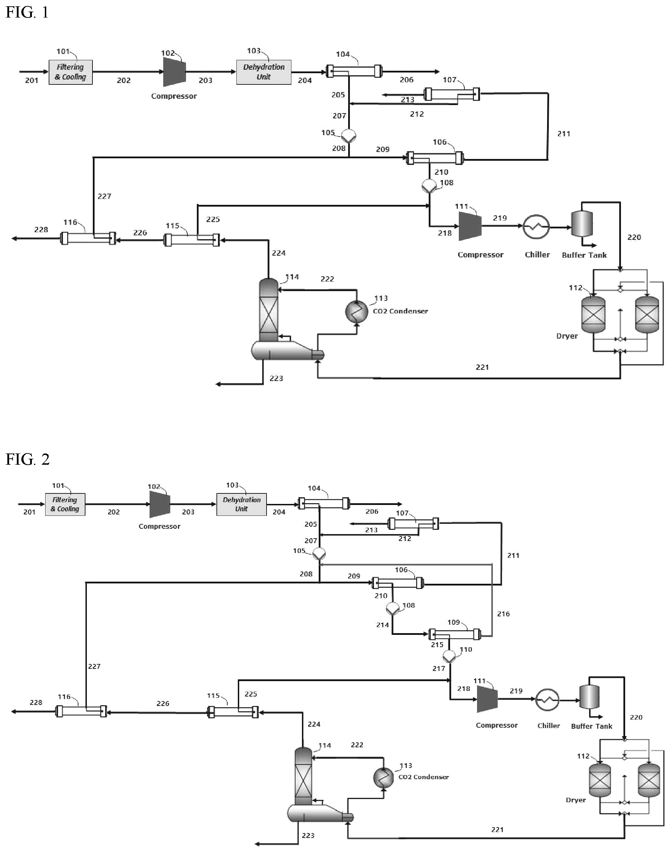

FIG. 1 illustrates a carbon dioxide capturing process diagram according to an embodiment of the present invention.

FIG. 2 illustrates a carbon dioxide capturing process diagram including a third capturing separation membrane according to another embodiment of the present invention.

Hereinafter, a carbon dioxide capturing apparatus and process of the present invention will be described in more detail with reference to FIGS. 1 and 2.

According to an aspect of the present invention, a carbon dioxide capturing apparatus includes a first capturing separation membrane which is supplied with a first capturing separation membrane supply gas including a carbon dioxide containing gas mixture to be separated into a first capturing separation membrane permeation gas and a first capturing separation membrane residual gas, a second capturing separation membrane which is supplied with a second capturing separation membrane supply gas including the first capturing separation membrane permeation gas to be separated into a second capturing separation membrane permeation gas and a second capturing separation membrane residual gas, a recirculation separation membrane which is supplied with the second capturing separation membrane residual gas to be separated into a recirculation separation membrane permeation gas and a recirculation separation membrane residual gas and circulates the recirculation separation membrane permeation gas to the second capturing separation membrane, a first heat exchanger which cools first heat exchanger supply gas including the second capturing separation membrane permeation gas, a carbon dioxide refinement separation tower including a separation tower which receives gas cooled in the first heat exchanger, an upper portion in which a carbon dioxide containing gas is obtained, and a lower portion in which a high-purity carbon dioxide liquid is obtained, and a first recovery separation membrane which is supplied with the carbon dioxide containing gas obtained from the upper portion to be separated into a first recovery separation membrane permeation gas and a first recovery separation membrane residual gas.

The present invention relates to an apparatus and a process of capturing carbon dioxide from carbon dioxide containing gas mixture. A type of the carbon dioxide containing gas mixture is not specifically limited, but may refer to an emission gas in a desirable implementation example.

The emission gas (exhaust gas) refers to gas emitted from power plants, steel mills, and chemical plants and is mainly produced by the combustion reaction of fossil fuels (hydrocarbons) and basically contains carbon dioxide and moisture, and may further include nitrogen and unused oxygen if air is provided as oxygen containing gas or oxidizer. Further, the emission gas may include a gas component derived from impurities in a raw material of the combustion process, such as hydrogen sulfide, sulfur oxides, nitrogen oxides, hydrochloric acid, and mercury. However, the impurities may be present in a very small amount, or some may not be substantially contained.

The carbon dioxide capturing apparatus of the present invention may further include a first rotation device 102 which compresses the first capturing separation membrane supply gas 204 before being supplied to the first capturing separation membrane 104.

The first rotation device 102 may be one or more selected from the group consisting of a compressor, a vacuum pump, and a blower and the compressor is the most desirable to implement a sufficient pressure for a separation efficiency.

The first rotation device 102 compresses the first rotation device supply gas 202 including carbon dioxide containing gas mixture 201.

If the carbon dioxide containing gas mixture 201 is an emission gas, generally, the carbon dioxide containing gas mixture is in a high-temperature state, therefore, the first rotation device 102 may further include a pre-heat exchanger 101 for lowering the temperature of the emission gas to a room temperature, and more specifically, to 15 to 50°C.

The first rotation device 102 compresses the first rotation device supply gas 202 having a normal pressure ranging from 1.0 to 1.3 bar to a pressure of 2 to 5 bar, desirably 2.0 to 3.5 bar to implement a pressure ratio to perform the separation process in the first capturing separation membrane 104 to be described below. If the pressure is compressed below the lower limit value, it is difficult to expect the separation efficiency increase effect from the capturing separation membrane and in contrast, if the pressure exceeds the upper limit value, it is not desirable because the energy consumption is sharply increased.

If gas flowing during the liquefaction process contains moisture, the water freezes during the liquefaction process, which may cause a damage or a failure of the device, such as a measuring device. Therefore, the carbon dioxide capturing apparatus of the present invention may further include a dryer which removes moisture from a carbon dioxide containing gas mixture or a separation membrane permeation gas. The dryer may remove the moisture such that the moisture content of the gas flow is approximately 50 ppm or lower, approximately 30 ppm or lower, more specifically, approximately 10 ppm or lower and even more specifically, such that the gas flow contains substantially no moisture. At this time, the carbon dioxide capturing apparatus of the present invention may include one or a plurality of dryers and desirably, the dryer may remove moisture from any one or more of a first rotation device rear-end gas 203 or a second rotation device rear-end gas 219 to be described below.

The first capturing separation membrane 104 is supplied with the first capturing separation membrane supply gas 204 to be separated into a first capturing separation membrane permeation gas 205 and a first capturing separation membrane residual gas 206.

The first capturing separation membrane supply gas 204 includes a carbon dioxide containing gas mixture 201 or a first rotation device rear-end gas 203. Further, the first capturing separation membrane supply gas 204 may further include any one or more of a first recovery separation membrane permeation gas 225 and a second recovery separation membrane permeation gas 227, and at this time, a recovery rate of the carbon dioxide may be increased and a separation efficiency of carbon dioxide may be further improved.

The first capturing separation membrane supply gas 204 is supplied to the first capturing separation membrane 104 to be separated into a first capturing separation membrane permeation gas 205 rich in carbon dioxide and a first capturing separation membrane residual gas 206 poor in carbon dioxide.

The gas separation process through the separation membrane may be performed by a dissolution-diffusion mechanism. At this time, the separation efficiency varies depending on the carbon dioxide permeability (GPU) and carbon dioxide selectivity (for example, CO₂/N₂) of the first capturing separation membrane 104.

The first capturing separation membrane 104 may be formed of any one or more of polysulfone (PSF) and polyimide (PI).

Any one or more of separation processes using the first capturing separation membrane 104, a second capturing separation membrane 106 and a third capturing separation membrane 109 to be described below may be performed at the room temperature and desirably performed at a low temperature by considering the characteristics of polysulfone (PSF) or polyimide (PI) separation membrane material.

Vacuum pumps are further installed in the first capturing separation membrane permeation gas (205) discharger, a second capturing separation membrane permeation gas (210) discharger, and a third capturing separation membrane permeation gas (215) discharger to be described below to increase a pressure ratio before and after the separation membrane, thereby improving the separation efficiency.

The first capturing separation membrane residual gas 206 which is a nitrogen-dominant gas poor in carbon dioxide may be discharged to the outside.

The second capturing separation membrane 106 is supplied with the second capturing separation membrane supply gas 209 to be separated into a second capturing separation membrane permeation gas 210 which passes through the second capturing separation membrane and a second capturing separation membrane residual gas 211 which does not pass through the second capturing separation membrane.

The second capturing separation membrane supply gas 209 includes the first capturing separation membrane permeation gas 205 and a recirculation separation membrane permeation gas 212 to be described below. Further, the second capturing separation membrane supply gas 209 may further include any one or more of a first recovery separation membrane permeation gas 225 and a second recovery separation membrane permeation gas 227.

The second capturing separation membrane permeation gas 210 may have an increased carbon dioxide concentration more than the first capturing separation membrane permeation gas 205 and the carbon dioxide concentration of the second capturing separation membrane residual gas 211 may be relatively low.

In the carbon dioxide capturing apparatus of the present invention, the vacuum pump 108 is further installed in the second capturing separation membrane permeation gas 210 discharger to discharge the second capturing separation membrane permeation gas 210 at a normal pressure or a pressure close thereto, to increase the pressure ratio before and after the separation membrane, thereby increasing the separation efficiency through the second capturing separation membrane 106.

The second capturing separation membrane 106 may be formed of any one or more materials of polysulfone (PSF) and polyimide (PI).

The carbon dioxide capturing apparatus of the present invention may further include a third capturing separation membrane 109 depending on the carbon dioxide concentration in the emission gas. As the carbon dioxide concentration in the emission gas is lower, it is desirable that the third capturing separation membrane 109 is additionally introduced to increase the recovery rate of the carbon dioxide.

The third capturing separation membrane 109 is supplied with a third capturing separation membrane supply gas 214 to be separated into a third capturing separation membrane permeation gas 215 which passes through the third capturing separation membrane 109 and a third capturing separation membrane residual gas 216 which does not pass through the third capturing separation membrane 109.

The third capturing separation membrane supply gas 214 may include the second capturing separation membrane permeation gas 210 and further include any one or more of the first recovery separation membrane permeation gas 225 and the second recovery separation membrane permeation gas 227.

A vacuum pump 110 may be further installed in the third capturing separation membrane permeation gas (215) discharger.

In the third capturing separation membrane permeation gas 215, the carbon dioxide concentration is higher than that in the second capturing separation membrane permeation gas 210.

The third capturing separation membrane residual gas 216 which does not pass through the third capturing separation membrane 109 may be discharged to the outside or may be circulated to the second capturing separation membrane 106, which is more desirable to increase the carbon dioxide recovery rate.

The recirculation separation membrane 107 may be supplied with the second capturing separation membrane residual gas 211 to be separated into a recirculation separation membrane permeation gas 212 and a recirculation separation membrane residual gas 213 and supply the recirculation separation membrane permeation gas 212 to the second capturing separation membrane 106.

According to the present invention, if the recirculation separation membrane 107 is introduced to discharge the second capturing separation membrane residual gas 211 to the outside, carbon dioxide that would be lost is recirculated to increase a total recovery rate. Further, the carbon dioxide is recirculated to the second capturing separation membrane 106, rather than the first rotation device 102, which prevents an increase in a rotation device flow rate, thereby achieving an excellent carbon dioxide recovery rate without increasing the power consumption.

The recirculation separation membrane permeation gas 212 is a gas of the second capturing separation membrane residual gas 211 which passes through the recirculation separation membrane 107 and in which the carbon dioxide concentration is increased.

The first to third capturing separation membranes and the recirculation separation membrane are the same or different and may be independently formed of any one or more materials of polysulfone (PSF) or polyimide (PI).

The carbon dioxide capturing apparatus of the present invention may further include a second rotation device 111 which compresses the first heat exchanger supply gas 221 before being supplied to the first heat exchanger 113 to increase the carbon dioxide separation efficiency.

The second rotation device 111 may be one or more selected from the group consisting of a compressor, a vacuum pump, and a blower and the compressor is the most desirable to implement a sufficient pressure for a separation efficiency.

The second rotation device 111 compresses the second rotation device supply gas 218 to form a pressure required for a liquefaction process to be described below. At this time, a pressure of the compressed gas may be 18 to 50 bar, and desirably 21 to 31 bar. If the pressure of the compressed gas is below the lower limit value, the liquefaction may not be satisfactorily performed, and in contrast, if the pressure exceeds the upper limit value, the energy consumption amount may be significantly increased.

The second rotation device supply gas 218 is the first heat exchanger supply gas 221, and to be more specific, includes the second capturing separation membrane permeation gas 210 or the third capturing separation membrane permeation gas 215. Further, depending on the number of recovery separation membrane processes to be described below, the second rotation device supply gas 218 may further include any one or more of the first recovery separation membrane permeation gas 225 and the second recovery separation membrane permeation gas 227.

As illustrated in FIG. 2, if the present invention further includes a third capturing separation membrane 109, the second rotation device supply gas 218 may include the third capturing separation membrane permeation gas 215 in the second capturing separation membrane permeation gas 210.

The first heat exchanger 113 is supplied with the first heat exchanger supply gas 221 to cool the carbon dioxide in the separation tower 114 to be described below to a temperature appropriate for production, specifically, -35 to 18°C.

The first heat exchanger supply gas 221 may include the second capturing separation membrane permeation gas 210, the third capturing separation membrane permeation gas 215, or the second rotation device rear-end gas 219.

The carbon dioxide refinement separation tower includes a separation tower 114 which is supplied with gas cooled in the first heat exchanger, an upper portion in which a carbon dioxide containing gas 224 is obtained, and a lower portion in which high-purity carbon dioxide liquid 223 is obtained.

The number of stages or trays of the separation tower 114 may be six to ten and may vary depending on the carbon dioxide purity and other process conditions.

The separation tower supply gas 222 which is cooled by the first heat exchanger 113 is supplied to the separation tower 114 so that a high-purity carbon dioxide liquid 223 is obtained in the lower portion and the carbon dioxide containing gas 224 is obtained in the upper portion through the separation and refinement process.

Carbon dioxide of the high-purity carbon dioxide liquid 223 which is obtained in the lower portion may have 99 mol% or more and may be 99.9 mol% or more depending on the purpose of the carbon dioxide.

Even though the high-purity carbon dioxide is recovered through the separation membrane and the separation tower 114 described above, 100% of carbon dioxide contained in the emission gas cannot be recovered. Accordingly, in the present disclosure, a recovery separation membrane module which recovers residual carbon dioxide of the carbon dioxide containing gas 224 obtained from an upper portion via the separation tower 114 is further included to recover the high-purity carbon dioxide liquid and significantly reduce an amount of discharged carbon dioxide.

The first recovery separation membrane 115 is supplied with the carbon dioxide containing gas 224 obtained from the upper portion to be separated into the first recovery separation membrane permeation gas 225 and the first recovery separation membrane residual gas 226 which pass through the first recovery separation membrane 115 and circulates the first recovery separation membrane permeation gas 225 to the first rotation device 102, the first capturing separation membrane 104, the second capturing separation membrane 106, the third capturing separation membrane 109, or the second rotation device 111. By doing this, an amount of recovered carbon dioxide may be improved and a temperature of gas may be lowered, thereby improving the process efficiency. Most desirably, when the first recovery separation membrane permeation gas 225 is circulated to the second rotation device 111, the CO₂ recovery rate is notably improved so that the first recovery separation membrane permeation gas 225 may be circulated to the second rotation device 111.

The carbon dioxide containing gas 224 which is obtained in the upper portion of the carbon dioxide refinement separation tower is supplied to the first recovery separation membrane 115 to be separated into the first recovery separation membrane permeation gas 225 which has a higher carbon dioxide concentration and a first recovery separation membrane residual gas 226 which remains to have a lower carbon dioxide concentration.

According to the present invention, during the process of recovering the carbon dioxide of the carbon dioxide containing gas 224 obtained from the upper portion of the separation tower 114 after the carbon dioxide liquefaction process through the separation tower 114, the gas which undergoes the liquefaction process is supplied in its low-temperature state to recover the carbon dioxide so that the carbon dioxide selectivity is improved without additional compression or cooling process to increase the separation efficiency, thereby remarkably improving the separation efficiency. At this time, the process using the first recovery separation membrane 115 and/or the second recovery separation membrane 116 to be described below may be performed in the low-temperature state without an addition process (for example, compression or cooling) after the liquefaction process and to be more specific, performed at -40 to -10°C, and desirably -35 to -18°C.

The first recovery separation membrane 115 may be formed of any one or more materials of polysulfone (PSF) and polyimide (PI). In the following Table 1, selectivity of separation membranes formed of polysulfone (PSF) or polyimide (PI) depending on a temperature is represented. As represented in Table 1, it is understood that the carbon dioxide selectivity of separation membranes formed of polysulfone (PSF) or polyimide (PI) at the low temperature is remarkably increased.

**[Table 1]**

| Classification | PFS | | | PI | | |
|---|---|---|---|---|---|---|
| Temperature | CO_{2/}N₂ | CO_{2/}O₂ | O_{2/}N₂ | CO_{2/}N₂ | CO_{2/}O₂ | O_{2/}N₂ |
| -20°C | 75.9 | 10.5 | 7.3 | 69.9 | 9.9 | 7.1 |
| -10°C | 57.9 | 9.1 | 6.4 | 55.2 | 9.6 | 5.8 |
| 0°C | 43.2 | 7.2 | 6.0 | 39.4 | 8.2 | 4.8 |
| 10°C | 34.5 | 6.1 | 7.7 | 31.9 | 7.3 | 4.4 |
| 20°C | 31.0 | 5.7 | 5.4 | 29.9 | 7.5 | 4.0 |

In contrast, a separation membrane formed of other materials, such as polyamide or polyether, other than polysulfone or polyimide (PI), has an insignificant improvement effect of carbon dioxide selectivity so that it is not suitable for applying the low-temperature process.

A low-temperature first recovery separation membrane permeation gas 225 which passes through the first recovery separation membrane 115, among the carbon dioxide containing gas, is mixed with a gas which is supplied to any one of the first rotation device 102, the first capturing separation membrane 104, the second capturing separation membrane 106, the third capturing separation membrane 109, or the second rotation device 111 to be circulated, to improve an amount of recovered carbon dioxide and reduce the temperature of gas, thereby improving the process efficiency.

According to one implementation example of the present invention, in order to minimize an energy consumed for cooling using the first heat exchanger 113, a second heat exchanger which recovers cold energy of the first recovery separation membrane residual gas 226 which does not pass through the first recovery separation membrane 115 may be further included. At this time, the second heat exchanger may recover the cold energy by exchanging the heat of the first recovery separation membrane residual gas 226 with gas which is supplied to any one of the first rotation device 102, the first capturing separation membrane 104, the second capturing separation membrane 106, the third capturing separation membrane 109, the second rotation device 111, or the first heat exchanger 113.

The carbon dioxide capturing apparatus of the present invention may further include a second recovery separation membrane 116.

The second recovery separation membrane 116 is supplied with the first recovery separation membrane residual gas 226 which does not pass through the first recovery separation membrane 115 to be separated into the second recovery separation membrane permeation gas 227 which passes through the second recovery separation membrane 116 and the second recovery separation membrane residual gas 228 and supplies the second recovery separation membrane permeation gas 227 to the first rotation device 102, the first capturing separation membrane 104, the second capturing separation membrane 106, the third capturing separation membrane 109, or the second rotation device 111.

At this time, the second recovery separation membrane permeation gas 227 which passes through the second recovery separation membrane 116 to have an increased carbon dioxide concentration circulates to the first rotation device 102, the first capturing separation membrane 104, the second capturing separation membrane 106, the third capturing separation membrane 109, or the second rotation device 111 to lower the temperature of a raw material gas which is supplied to the first to third capturing separation membranes and increase a carbon dioxide content, thereby improving the separation efficiency, minimizing the emission of the carbon dioxide, and remarkably improving the recovery rate.

According to one implementation example of the present invention, a third heat exchanger which recovers the cold energy of the second recovery separation membrane residual gas 228 which does not pass through the second recovery separation membrane 116 is further included. The third heat exchanger may recover the cold energy by exchanging the heat of the second recovery separation membrane residual gas 228 with gas which is supplied to any one of the first rotation device 102, the first capturing separation membrane 104, the second capturing separation membrane 106, the third capturing separation membrane 109, the second rotation device 111, or the first heat exchanger 113.

According to another aspect of the present invention, a carbon dioxide capturing process includes supplying a first capturing separation membrane supply gas including a carbon dioxide containing gas mixture to a first capturing separation membrane to be separated into a first capturing separation membrane permeation gas and a first capturing separation membrane residual gas, supplying a second capturing separation membrane supply gas including the first capturing separation membrane permeation gas to a second capturing separation membrane to be separated into a second capturing separation membrane permeation gas and a second capturing separation membrane residual gas, supplying the second capturing separation membrane residual gas to a recirculation separation membrane to be separated into a recirculation separation membrane permeation gas and a recirculation separation membrane residual gas and circulate the recirculation separation membrane permeation gas to the second capturing separation membrane, cooling a first heat exchanger supply gas including the second capturing separation membrane permeation gas using a first heat exchanger, obtaining a carbon dioxide containing gas from an upper portion of a separation tower and recovering a high-purity carbon dioxide liquid from a lower portion of a separation tower through a separation and refinement process by supplying a gas cooled in the first heat exchanger to the separation tower, and supplying the carbon dioxide containing gas obtained from the upper portion to a first recovery separation membrane to separate the gas into a first recovery separation membrane permeation gas and a first recovery separation membrane residual gas.

### Compressing first capturing separation membrane supply gas by first rotation device before being supplied to first capturing separation membrane

The carbon dioxide capturing process of the present invention may further include compressing the first capturing separation membrane supply gas 204 using a first rotation device 102 before being supplied to the first capturing separation membrane 104.

The first rotation device 102 compresses the first rotation device supply gas 202 including carbon dioxide containing gas mixture 201.

If the carbon dioxide containing gas mixture 201 is an emission gas, since the emission gas is generally captured in a high-temperature state, the emission gas may be cooled by the pre-heat exchanger 101 and then introduced to the first rotation device 102.

A first rotation device supply gas 202 may be compressed by the first rotation device 102 and introduced to the first rotation device 102 at a normal pressure ranging from 1.0 to 1.5 bar, and then compressed to implement a pressure ratio at which the separation process in the first capturing separation membrane 104 to be described below will be performed.

The first rotation device 102 may compress the first rotation device supply gas 202 to a pressure of 2 to 5 bar, and desirably 2.0 to 3.5 bar.

Before supplying the first rotation device rear-end gas 203 for a liquefaction process to be described below, a moisture may be removed therefrom through the dryer and desirably, moisture from any one or more of the first rotation device rear-end gas 203 or a second rotation device rear-end gas 219 to be described below may be removed.

### Supplying first capturing separation membrane supply gas including carbon dioxide containing gas mixture to first capturing separation membrane to be separated into first capturing separation membrane permeation gas and first capturing separation membrane residual gas;

The first capturing separation membrane supply gas 204 is supplied to the first capturing separation membrane 104 to separate and obtain a first capturing separation membrane permeation gas 205 relatively rich in carbon dioxide and a first capturing separation membrane residual gas 206 poor in carbon dioxide.

The first capturing separation membrane supply gas 204 includes a carbon dioxide containing gas mixture 201 or a first rotation device rear-end gas 203. Further, the first capturing separation membrane supply gas 204 may further include any one or more of a first recovery separation membrane permeation gas 225 and a second recovery separation membrane permeation gas 227, and at this time, a recovery rate of the carbon dioxide may be increased and a separation efficiency of carbon dioxide may be further improved.

The first capturing separation membrane 104 may be formed of any one or more materials of polysulfone (PSF) or polyimide (PI).

A separation processes using the first capturing separation membrane 104, a second capturing separation membrane 106, or a third capturing separation membrane 109 to be described below may be performed at the room temperature and may be desirably performed at a low temperature by considering the characteristics of polysulfone (PSF) or polyimide (PI) separation membrane material.

A vacuum pump 105 is further installed in a permeation portion of the first capturing separation membrane permeation gas to improve a separation efficiency.

The first capturing separation membrane residual gas 206 which is a nitrogen-dominant gas poor in carbon dioxide may be discharged to the outside.

### Supplying second capturing separation membrane supply gas including first capturing separation membrane permeation gas to second capturing separation membrane to be separated into second capturing separation membrane permeation gas and second capturing separation membrane residual gas

The second capturing separation membrane supply gas 209 is supplied to the second capturing separation membrane 106 to separate and obtain a second capturing separation membrane permeation gas 210 which passes through the second capturing separation membrane and a second capturing separation membrane residual gas 211 which does not pass through the second capturing separation membrane.

The second capturing separation membrane supply gas 209 includes the first capturing separation membrane permeation gas 205 and a recirculation separation membrane permeation gas 212 to be described below. Further, the second capturing separation membrane supply gas 209 may further include any one or more of a first recovery separation membrane permeation gas 225 and a second recovery separation membrane permeation gas 227.

In the second capturing separation membrane permeation gas 210, the carbon dioxide concentration is higher than that in the first capturing separation membrane permeation gas 205.

A vacuum pump 108 is further installed in a permeation portion of the second capturing separation membrane permeation gas 210, thereby increasing a pressure ratio before and after the separation membrane to improve a separation efficiency.

The second capturing separation membrane 106 may be formed of any one or more materials of polysulfone (PSF) and polyimide (PI).

The carbon dioxide capturing process of the present invention may additionally introduce a separation membrane process using a third capturing separation membrane 109 depending on a carbon dioxide concentration in the emission gas. As the carbon dioxide concentration in the emission gas is lower, it is desirable that the third capturing separation membrane 109 is additionally introduced to increase the recovery rate of the carbon dioxide. At this time, as illustrated in FIG. 2, a third capturing separation membrane supply gas 214 including a second capturing separation membrane permeation gas 210 may be supplied to the third capturing separation membrane 109.

As illustrated in FIG. 2, when the carbon dioxide capturing process of the present invention further includes supplying a third capturing separation membrane supply gas 214 including a second capturing separation membrane permeation gas 210 to the third capturing separation membrane 109, the second capturing separation membrane permeation gas 210 which passes through the second capturing separation membrane 106 is not directly supplied to the second rotation device 111 to be described below or the first exchanger 113, but is supplied to the third capturing separation membrane 109 to be separated into a third capturing separation membrane permeation gas 215 which passes through the third capturing separation membrane 109 and a third capturing separation membrane residual gas 216 which does not pass through the third capturing separation membrane 109.

The third capturing separation membrane supply gas 214 may include the second capturing separation membrane permeation gas 210 and further include any one or more of the first recovery separation membrane permeation gas 225 and the second recovery separation membrane permeation gas 227.

The third capturing separation membrane residual gas 216 which does not pass through the third capturing separation membrane 109 may be discharged to the outside or circulated to the second capturing separation membrane 106, and desirably circulated to the second capturing separation membrane 106.

In the third capturing separation membrane permeation gas 215, the carbon dioxide concentration is higher than that in the second capturing separation membrane permeation gas 210.

The third capturing separation membrane 109 may be formed of any one or more materials of polysulfone (PSF) and polyimide (PI).

### Supplying second capturing separation membrane residual gas to recirculation separation membrane to be separated into recirculation separation membrane permeation gas and recirculation separation membrane residual gas and circulate recirculation separation membrane permeation gas to second capturing separation membrane

The second capturing separation membrane residual gas 211 is supplied to the recirculation separation membrane 107 to be separated into a recirculation separation membrane permeation gas 212 which passes through the recirculation separation membrane and a recirculation separation membrane residual gas 212 which does not pass through the recirculation separation membrane and the recirculation separation membrane permeation gas 212 is supplied to the second capturing separation membrane 106.

At this time, if the second capturing separation membrane residual gas 211 is discharged, carbon dioxide that would be lost is recirculated to increase a total recovery rate. Further, the carbon dioxide is recirculated to the second capturing separation membrane 106, rather than the first rotation device 102, which prevents an increase in a rotation device flow rate, thereby achieving an excellent carbon dioxide recovery rate without increasing the power consumption.

In the recirculation separation membrane permeation gas 212, the carbon dioxide concentration is higher than that in the second capturing separation membrane permeation gas 211.

The recirculation separation membrane may be formed of any one or more materials of polysulfone (PSF) and polyimide (PI).

### Compressing first heat exchanger supply gas by second rotation device before being cooled by first heat exchanger

The carbon dioxide capturing process of the present invention may further include compressing the first heat exchanger supply gas 221 using a second rotation device 111 before cooling the first heat exchanger supply gas 221 by the first heat exchanger 113 to increase the carbon dioxide separation efficiency.

The second rotation device 111 compresses the second rotation device supply gas 218 to form a pressure required for a liquefaction process to be described below. At this time, a pressure of the compressed gas may be 18 to 50 bar, and desirably 21 to 31 bar.

The second rotation device supply gas 218 is the first heat exchanger supply gas 221 and to be more specific, includes the second capturing separation membrane permeation gas 210 or the third capturing separation membrane permeation gas 215. Further, depending on the number of recovery separation membrane processes to be described below, the second rotation device supply gas 218 may further include any one or more of the first recovery separation membrane permeation gas 225 and the second recovery separation membrane permeation gas 227.

As illustrated in FIG. 2, if the present invention further includes a third capturing separation membrane 109, the second rotation device supply gas 218 may include the third capturing separation membrane permeation gas 215 in the second capturing separation membrane permeation gas 210.

As described above, before supplying the second rotation device rear-end gas 219 compressed by the second rotation device to the first heat exchanger 113, removing a moisture may be further included. Generally, a cooler which removes moisture is included in the rotation device (specifically, a compressor) so that the moisture is removed using the cooler, but in order to suppress freezing of a very small amount of mixture during the liquefaction process, a moisture removal step is required.

### Cooling first heat exchanger supply gas including second capturing separation membrane permeation gas using first heat exchanger

The first heat exchanger supply gas 221 is supplied and is cooled by the first heat exchanger 113 to be cooled at a temperature appropriate for separation, refinement and liquefaction of carbon dioxide in the separation tower 114. At this time, as a refrigerant of the first heat exchanger, Freon, nitrogen, and propylene may be used and a temperature of the cooled gas may be -35 to -18°C.

The first heat exchanger supply gas 221 may include the second capturing separation membrane permeation gas 210, the third capturing separation membrane permeation gas 215, or the second rotation device rear-end gas 219.

### Obtaining carbon dioxide containing gas from upper portion of separation tower and recovering high-purity carbon dioxide liquid from lower portion through separation and refinement process by supplying gas cooled in first heat exchanger to separation tower

The separation tower supply gas 222 cooled by the first heat exchanger 113 is transferred to the separation tower 114 to produce a high-purity carbon dioxide liquid 223 at a lower portion by means of a separation and refinement process.

Carbon dioxide of the high-purity carbon dioxide liquid 223 which is obtained in the lower portion of the separation tower 114 may have 99 mol% or more and may be 99.9 mol% or more depending on the purpose of the carbon dioxide.

### Supplying carbon dioxide containing gas obtained in upper portion to first recovery separation membrane to be separated into first recovery separation membrane permeation gas and first recovery separation membrane residual gas and supplying first recovery separation membrane permeation gas to first rotation device, first capturing separation membrane, second capturing separation membrane, third capturing separation membrane, or second rotation device

The carbon dioxide containing gas 224 is supplied to the first recovery separation membrane 115 to be separated into the first recovery separation membrane permeation gas 225 which is a gas flow which has a high carbon dioxide concentration and a first recovery separation membrane residual gas 226 which is a gas flow which remains to have a lower carbon dioxide concentration.

At this time, the process using the first recovery separation membrane 115 and the second recovery separation membrane 116 to be described below may be performed at a low temperature state without performing an additional process (for example, compression or cooling) after a liquefaction process and more specifically, performed at -40 to -10°C, and desirably, -35 to -18°C.

The first recovery separation membrane 115 may be polysulfone (PSF) or polyimide (PI). If the first recovery separation membrane 115 is a material other than polysulfone (PSF) or polyimide (PI), the improvement effect of carbon dioxide selectivity at the low temperature is insignificant so that the first recovery separation membrane may not be appropriate for applying a low-temperature process.

A low-temperature first recovery separation membrane permeation gas 225 which passes through the first recovery separation membrane 115, among the carbon dioxide containing gas, may be mixed with a gas which is supplied to any one of the first rotation device 102, the first capturing separation membrane 104, the second capturing separation membrane 106, the third capturing separation membrane 109, or the second rotation device 111 to be recirculated, depending on a type and the number of capturing separation membranes.

According to one implementation example of the present invention, recovering a cold energy of the first recovery separation membrane residual gas 226 may be further included. At this time, the cold energy of the first recovery separation membrane residual gas 226 may be recovered by exchanging the heat with gas which is supplied to any one of the first rotation device 102, the first capturing separation membrane 104, the second capturing separation membrane 106, the third capturing separation membrane 109, the second rotation device 111, or the first heat exchanger 113.

### Supplying first recovery separation membrane residual gas to second recovery separation membrane to obtain second recovery separation membrane permeation gas and second recovery separation membrane residual gas and supplying second recovery separation membrane permeation gas to first rotation device, first capturing separation membrane, second capturing separation membrane, third capturing separation membrane, or second rotation device

According to one desirable implementation example of the present invention, the carbon dioxide capturing process may further include supplying a first recovery separation membrane residual gas 226 which does not pass through the first recovery separation membrane to the second recovery separation membrane 116 after supplying the carbon dioxide containing gas 224 to the first recovery separation membrane 115.

The first recovery separation membrane residual gas 226 still contains carbon dioxide so that the second recovery separation membrane process is further included to minimize an amount of carbon dioxide which is discharged without being recovered. Further, when the carbon dioxide capturing process of the present invention further includes the second recovery separation membrane process, the first recovery separation membrane permeation gas 225 may be circulated to the second rotation device 111 or the third capturing separation membrane 109.

The first recovery separation membrane residual gas 226 is separated into a second recovery separation membrane permeation gas 227 which passes through the second recovery separation membrane 116 to have a relatively high carbon dioxide concentration and a second recovery separation membrane residual gas 228 which has a lower carbon dioxide concentration. The second recovery separation membrane permeation gas 227 is circulated to the first rotation device 102, the first capturing separation membrane 104, the second capturing separation membrane 106, or the third capturing separation membrane 109. At this time, a carbon dioxide content of a raw material gas is increased to improve the separation efficiency, minimize the emission of the carbon dioxide, and improve the recovery rate.

According to one implementation example of the present invention, recovering a cold energy of the second recovery separation membrane residual gas 228 may be further included. At this time, the recovering of a cold energy of the second recovery separation membrane residual gas 228 may be performed by exchanging the heat with gas which is supplied to any one of the first rotation device 102, the first capturing separation membrane 104, the second capturing separation membrane 106, the third capturing separation membrane 109, the second rotation device 111, and the first heat exchanger 113.

According to the most desirable implementation example of the present invention, the carbon dioxide capturing process further includes:
compressing a first capturing separation membrane supply gas by the first rotation device before being supplied to the first capturing separation membrane,
supplying the second capturing separation membrane permeation gas to the third capturing separation membrane to be separated into a third capturing separation membrane permeation gas and a third capturing separation membrane residual gas, and
compressing a first heat exchanger supply gas by a second rotation device before being cooled by a first heat exchanger, and
supplying the first recovery separation membrane residual gas to the second recovery separation membrane to be separated into the second recovery separation membrane permeation gas and the second recovery separation membrane residual gas and supplying the second recovery separation membrane permeation gas to the second capturing separation membrane,
only the third capturing separation membrane permeation gas in the second capturing separation membrane permeation gas is compressed by the second rotation device,
the third capturing separation membrane residual gas is supplied to the second capturing separation membrane,
the first recovery separation membrane permeation gas is supplied to the second rotation device,
the first rotation device compresses a supplied gas at a pressure of 2.0 to 3.5 bar,
the second rotation device compresses a supplied gas at a pressure of 21 to 31 bar,
the cooling in the cooling with the first heat exchanger is performed at -35 to -18°,
the supplying of the carbon dioxide containing gas to the first recovery separation membrane is performed while maintaining a temperature of the first recovery separation membrane at -35 to -18°C,
the supplying of the first recovery separation membrane residual gas to the second recovery separation membrane is performed while maintaining a temperature of the second recovery separation membrane at -35 to -18°C, and
the first capturing separation membrane, the second capturing separation membrane, the third capturing separation membrane, the first recovery separation membrane, and the second recovery separation membrane are the same or different from each other and may be formed of any one or more materials of polysulfone (PSF) and polyimide (PI).

It was confirmed that if the carbon dioxide capturing process of the present invention satisfied all the conditions of the most desirable implementation example, even though the carbon dioxide capturing process was performed for a long time, the carbon dioxide recovery rate was maintained at the same level as the initial level, which was particularly excellent.

Hereinafter, the present invention will be described in more detail with reference to Examples, but the scope and the content of the present invention cannot be interpreted as being reduced or limited by Examples below.

### Example 1

A process was designed as illustrated in FIG. 1 and carbon dioxide in an emission gas was captured and liquefied as represented in Table 2 for each flow, and a process result was represented in Table 4. At this time, as the first capturing separation membrane 104, the second capturing separation membrane 106, the recirculation separation membrane 107, the third capturing separation membrane 109, the first recovery separation membrane 115, and the second recovery separation membrane 116, a polysulfone (PSF) material was used.

**[Table 2]**

| Flow # | Temperature (°C) | Pressure (bar) | Composition (mol%) | | | | Flow rate (Nm³/h) |
|---|---|---|---|---|---|---|---|
| | | | CO₂ | N₂ | O₂ | H₂O | |
| 201 | 120 | 1.01 | 15.3 | 3.6 | 71.1 | 10.0 | 96,670 |
| 202 | 37 | 1.01 | 16.1 | 3.8 | 75.0 | 5.1 | 91,646 |
| 203 | 37 | 2.7 | 16.6 | 3.9 | 77.3 | 2.2 | 88,969 |
| 204 | 37 | 2.5 | 17.0 | 4.0 | 79.0 | 0.02 | 87,016 |
| 205 | 37 | 0.2 | 50.3 | 7.2 | 42.4 | 0.06 | 26,985 |
| 206 | 37 | 2.5 | 2.0 | 2.5 | 95.5 | | 60,031 |
| 207 | 37 | 0.2 | 50.4 | 10.2 | 39.4 | 0.04 | 36,052 |
| 208 | 37 | 1.3 | 50.4 | 10.2 | 39.4 | 0.04 | 36,052 |
| 209 | 37 | 1.3 | 51.1 | 10.4 | 38.4 | 0.04 | 37,077 |
| 210 | 37 | 0.2 | 87.2 | 6.9 | 5.8 | 0.1 | 15,960 |
| 211 | 37 | 1.3 | 23.9 | 13.0 | 63.1 | | 21,116 |
| 212 | 37 | 0.2 | 50.5 | 18.8 | 30.7 | | 9,083 |
| 213 | 37 | 1.3 | 3.8 | 8.7 | 87.5 | | 12,033 |
| 218 | 37 | 1.3 | 88.1 | 6.8 | 5.0 | 0.08 | 19,018 |
| 219 | 37 | 24.2 | 88.1 | 6.8 | 5.0 | 0.08 | 19,018 |
| 220 | 18 | 23.9 | 88.1 | 6.8 | 5.0 | 0.08 | 19,018 |
| 221 | 18 | 23.6 | 88.2 | 6.8 | 5.0 | | 19,002 |
| 222 | -33 | 23.2 | 88.2 | 6.8 | 5.0 | | 19,002 |
| 223 | -18 | 21.0 | 99.9 | 0.1 | | | 12,887 |
| 224 | -34 | 21.0 | 63.6 | 20.9 | 15.5 | | 2,750 |
| 225 | -51 | 1.3 | 95.1 | 4.8 | 0.1 | | 6,118 |
| 226 | -34 | 20.9 | 34.1 | 35.5 | 30.4 | | 3,059 |
| 227 | -42 | 1.3 | 78.1 | 19.0 | 2.9 | | 1,009 |
| 228 | -34 | 20.8 | 12.5 | 43.6 | 43.9 | | 2,050 |

### Example 2

A process was designed as illustrated in FIG. 2 and carbon dioxide in an emission gas was captured and liquefied as represented in Table 3 for each flow, and a process result was represented in Table 4. At this time, as the first capturing separation membrane 104, the second capturing separation membrane 106, the recirculation separation membrane 107, the third capturing separation membrane 109, the first recovery separation membrane 115, and the second recovery separation membrane 116, a polysulfone (PSF) material was used.

**[Table 3]**

| Flow# | Temperature (°C) | Pressure (bar) | Composition (mol%) | | | | Flow rate (Nm³/h) |
|---|---|---|---|---|---|---|---|
| | | | CO₂ | N₂ | O₂ | H₂O | |
| 201 | 120 | 1.01 | 15.3 | 3.6 | 71.1 | 10.0 | 96,670 |
| 202 | 37 | 1.01 | 16.1 | 3.8 | 75.0 | 5.1 | 91,646 |
| 203 | 37 | 2.7 | 16.6 | 3.9 | 77.3 | 2.2 | 88,969 |
| 204 | 37 | 2.5 | 17.0 | 4.0 | 79.0 | 0.02 | 87,016 |
| 205 | 37 | 0.2 | 45.2 | 7.3 | 47.4 | 0.05 | 31,307 |
| 206 | 37 | 2.5 | 1.1 | 2.1 | 96.8 | | 55,709 |
| 207 | 37 | 0.2 | 45.6 | 11.5 | 42.9 | 0.04 | 43,171 |
| 208 | 37 | 1.3 | 45.6 | 12.9 | 41.5 | 0.03 | 47,506 |
| 209 | 37 | 1.3 | 46.3 | 12.8 | 40.9 | 0.03 | 48,316 |
| 210 | 37 | 0.2 | 83.9 | 9.2 | 67.8 | 0.08 | 19,329 |
| 211 | 37 | 1.3 | 21.1 | 15.3 | 63.6 | | 28,988 |
| 212 | 37 | 0.2 | 46.4 | 22.5 | 31.1 | | 11,880 |
| 213 | 37 | 1.3 | 3.6 | 10.3 | 86.1 | | 17,109 |
| 214 | 37 | 1.3 | 83.9 | 9.2 | 6.8 | 0.08 | 19,329 |
| 215 | 37 | 0.2 | 94.9 | 4.3 | 0.7 | 0.1 | 14,994 |
| 216 | 37 | 1.3 | 46.0 | 26.3 | 27.7 | | 4,335 |
| 217 | 37 | 1.3 | 94.9 | 4.3 | 0.7 | 0.1 | 14,994 |
| 218 | 37 | 1.3 | 94.9 | 4.3 | 0.7 | 0.1 | 16,120 |
| 219 | 37 | 24.2 | 94.9 | 4.3 | 0.7 | 0.1 | 16,120 |
| 220 | 26 | 23.9 | 94.9 | 4.3 | 0.7 | 0.1 | 16,120 |
| 221 | 26 | 23.6 | 95.0 | 4.3 | 0.7 | | 16,104 |
| 222 | -30 | 23.2 | 95.0 | 4.3 | 0.7 | | 16,104 |
| 223 | -18 | 21.0 | 99.9 | 0.1 | | | 13,354 |
| 224 | -31 | 21.0 | 71.1 | 24.9 | 4.0 | | 2,750 |
| 225 | -40 | 1.3 | 95.1 | 4.8 | 0.1 | | 1,126 |
| 226 | -31 | 20.9 | 54.5 | 38.9 | 6.6 | | 1,624 |
| 227 | -45 | 1.3 | 87.2 | 12.4 | 0.4 | | 796 |
| 228 | -31 | 20.8 | 22.9 | 64.3 | 12.8 | | 828 |

**[Table 4]**

| CO₂ recovery rate (%) | |
|---|---|
| Example 1 | 87.0 |
| Example 2 | 90.2 |

As represented in Table 4, the carbon dioxide capturing apparatus and process of the present invention recover gas obtained in the separation tower by means of the separation membrane and recirculate the gas flow to have a very high carbon dioxide recovery rate.

### [Explanation of Reference Numerals and Symbols]

101: Pre-heat exchanger
102: First rotation device
103: Dryer
104: First capturing separation membrane
105: Vacuum pump
106: Second capturing separation membrane
107: Recirculation separation membrane
108: Vacuum pump
109: Third capturing separation membrane
110: Vacuum pump
111: Second rotation device
112: Dryer
113: First heat exchanger
114: Separation tower
115: First recovery separation membrane
116: Second recovery separation membrane
201: Carbon dioxide containing gas mixture
202: First rotation device supply gas
203: First rotation device rear-end gas
204: First capturing separation membrane supply gas
205: First capturing separation membrane permeation gas
206: First capturing separation membrane residual gas
207: Mixture gas of first capturing separation membrane permeation gas and recirculation separation membrane permeation gas
208: Mixture gas of first capturing separation membrane permeation gas and recirculation separation membrane permeation gas
209: Second capturing separation membrane supply gas
210: Second capturing separation membrane permeation gas
211: Second capturing separation membrane residual gas
212: Recirculation separation membrane permeation gas
213: Recirculation separation membrane residual gas
214: Third capturing separation membrane supply gas
215: Third capturing separation membrane permeation gas
216: Third capturing separation membrane residual gas
217: Third capturing separation membrane permeation gas
218: Second rotation device supply gas
219: Second rotation device rear-end gas
220: Dryer front-end gas
221: First heat exchanger supply gas
222: Separation tower supply gas
223: High-purity carbon dioxide liquid
224: Carbon dioxide containing gas
225: First recovery separation membrane permeation gas
226: First recovery separation membrane residual gas
227: Second recovery separation membrane permeation gas
228: Second recovery separation membrane residual gas

## Claims

1. A carbon dioxide capturing apparatus, comprising:
a first capturing separation membrane which is supplied with a first capturing separation membrane supply gas including a carbon dioxide containing gas mixture to be separated into a first capturing separation membrane permeation gas and a first capturing separation membrane residual gas;
a second capturing separation membrane which is supplied with a second capturing separation membrane supply gas including the first capturing separation membrane permeation gas to be separated into a second capturing separation membrane permeation gas and a second capturing separation membrane residual gas;
a recirculation separation membrane which is supplied with the second capturing separation membrane residual gas to be separated into a recirculation separation membrane permeation gas and a recirculation separation membrane residual gas and recirculates the recirculation separation membrane permeation gas to the second capturing separation membrane;
a first heat exchanger which cools a first heat exchanger supply gas including the second capturing separation membrane permeation gas;
a carbon dioxide refinement separation tower including a separation tower which receives gas cooled in the first heat exchanger, an upper portion in which a carbon dioxide containing gas is obtained, and a lower portion in which a high-purity carbon dioxide liquid is obtained; and
a first recovery separation membrane which is supplied with the carbon dioxide containing gas obtained from the upper portion to be separated into a first recovery separation membrane permeation gas and a first recovery separation membrane residual gas.

2. The carbon dioxide capturing apparatus of claim 1, further comprising:
a first rotation device which compresses the first capturing separation membrane supply gas before being supplied to the first capturing separation membrane.

3. The carbon dioxide capturing apparatus of claim 1, further comprising:
a second rotation device which compresses the first heat exchanger supply gas before being cooled by the first heat exchanger.

4. The carbon dioxide capturing apparatus of claim 3, wherein the second rotation device compresses a supplied gas at a pressure of 18 to 50 bar.

5. The carbon dioxide capturing apparatus of claim 1, further comprising:
a second recovery separation membrane which is supplied with the first recovery separation membrane residual gas to be separated into a second recovery separation membrane permeation gas and a second recovery separation membrane residual gas and supplies the second recovery separation membrane permeation gas to the first capturing separation membrane or the second capturing separation membrane.

6. The carbon dioxide capturing apparatus of claim 1, further comprising:
a third capturing separation membrane which is supplied with the second capturing separation membrane permeation gas to be separated into a third capturing separation membrane permeation gas and a third capturing separation membrane residual gas,
wherein only the third separation membrane permeation gas of the second capturing separation membrane permeation gas which passes through the third capturing separation membrane is cooled by the first heat exchanger.

7. The carbon dioxide capturing apparatus of claim 1, wherein a temperature of the first recovery separation membrane is -40 to -10°C.

8. The carbon dioxide capturing apparatus of claim 1, further comprising:
a second heat exchanger which recovers a cold heat of the first recovery separation membrane residual gas,
wherein the second heat exchanger exchanges a heat of the first recovery separation membrane residual gas with a gas which is supplied to any one of the first capturing separation membrane and the first heat exchanger.

9. The carbon dioxide capturing apparatus of claim 1, wherein the first capturing separation membrane, the second capturing separation membrane, and the first recovery separation membrane are the same or different from each other and are formed of one or more materials of polysulfone (PSF) or polyimide (PI).

10. A carbon dioxide capturing process, comprising:
supplying a first capturing separation membrane supply gas including a carbon dioxide containing gas mixture to a first capturing separation membrane to be separated into a first capturing separation membrane permeation gas and a first capturing separation membrane residual gas;
supplying a second capturing separation membrane supply gas including the first capturing separation membrane permeation gas to a second capturing separation membrane to be separated into a second capturing separation membrane permeation gas and a second capturing separation membrane residual gas;
supplying the second capturing separation membrane residual gas to a recirculation separation membrane to be separated into a recirculation separation membrane permeation gas and a recirculation separation membrane residual gas and circulating the recirculation separation membrane permeation gas to the second capturing separation membrane;
cooling a first heat exchanger supply gas including the second capturing separation membrane permeation gas using a first heat exchanger;
obtaining a carbon dioxide containing gas from an upper portion of a separation tower and recovering a high-purity carbon dioxide liquid from a lower portion of a separation tower through a separation and refinement process by supplying a gas cooled in the first heat exchanger to the separation tower; and
supplying the carbon dioxide containing gas obtained from the upper portion to a first recovery separation membrane to be separated into a first recovery separation membrane permeation gas and a first recovery separation membrane residual gas.
